# FASCICULE DE BREVET EUROPEEN

(11) **EP 3 520 185 B1**
(45) Date de publication et mention de la délivrance du brevet: **11.12.2024**
(21) Numéro de dépôt: 17780843.3
(22) Date de dépôt: 26.09.2017
(51) Int. Cl.: H02G 1/08

(54) **PINCE POUR INSÉRER UN BRIN ÉLASTIQUE EN FLEXION DANS UN RÉCEPTACLE DESTINÉ À RECEVOIR LE BRIN PAR UN ORIFICE**
KLEMME ZUM EINSETZEN EINES BIEGEELASTISCHEN STRANGS IN EINEN BEHÄLTER ZUR AUFNAHME DES STRANGES ÜBER EINE ÖFFNUNG
A CLAMP FOR INSERTING A BENDINGLY ELASTIC STRAND INTO A RECEPTACLE INTENDED TO RECEIVE THE STRAND VIA AN OPENING

(30) Priorité: 30.09.2016 FR 1659457
(43) Date de publication de la demande: 07.08.2019
(73) Titulaire: Orange, 92130 Issy-les-Moulineaux (FR)
(72) Inventeur: LECOQ, Daniel, 92326 Châtillon Cedex (FR); CAMPION, Jean-Luc, 92326 Châtillon Cedex (FR)
(86) Numéro de dépôt international: PCT/FR2017/052582
(87) Numéro de publication internationale: WO 2018/060585

(56) Documents cités:
- EP-A1- 0 285 699
- EP-B1- 0 285 699
- DE-A1- 2 926 986
- US-A- 1 959 490
- US-A- 3 549 128
- US-A- 3 789 484
- US-A1- 2003 173 555

## Description

### 1. Domaine de l'invention

La demande se situe dans le domaine de l'installation de câbles de dimensions assez réduites pour être maniables à la main. Elle concerne en particulier un outil pour le maniement d'un brin élastique en flexion, par exemple un câble ou une aiguille de tirage de câble, dans le but l'insérer le brin dans un réceptacle qui peut être un tube, ou une bobine de rangement.

### 2. Etat de la technique antérieure

Pour insérer un brin à la main dans un réceptacle tel qu'un tube ou une bobine, une personne doit empoigner le brin à la main à une certaine distance de l'orifice du réceptacle, cette distance correspondant à un pas d'insertion, exercer une certaine pression sur le brin empoigné afin de l'empêcher de glisser dans la main, approcher la main de l'orifice afin d'y faire entrer le pas de brin en l'y poussant, et ensuite relâcher le brin afin de repositionner la main à la même distance de l'orifice correspondant à un pas d'insertion, et ainsi de suite.

L'insertion d'un brin dans un réceptacle quel qu'il soit est une opération pénible à réaliser à main nue, dès que le brin rencontre un peu de résistance à l'insertion dans le réceptacle, ou si la longueur totale du brin à insérer est grande.

Des pinces existent pour faciliter cette opération, comme par exemple celle décrite par le brevet européen EP0285699, qui comprend une poignée coinçant un segment de brin dans une rainure.

La pression exercée par la main doit être suffisante pour bloquer la section de brin dans la pince. Comme un glissement du brin dans la rainure n'est pas forcément perceptible, une personne aura tendance à exercer plus de pression que nécessaire afin d'être sûre d'empêcher ce glissement, ce qui est fatiguant sur une longue durée.

Lors des repositionnements répétés de la pince le long du brin après insertion de chaque pas, un mécanisme pourvu d'un ressort est souvent nécessaire pour permettre une ouverture aisée de la pince.

Le brevet américain US 3,549,128 divulgue une pince coulissant dans un guide, présentant aussi les inconvénients décrits ci-dessus. Le brevet US 1,959,490 divulgue également une pince pour pousser et tirer un brin.

De plus, pour une opération d'insertion efficace, le pas d'insertion doit être grand, ou le mouvement doit être répété rapidement. Mais si le pas est trop grand, ou si le mouvement est trop rapide, la pince ne peut pas empêcher le brin de plier plutôt que de rentrer dans l'orifice, ce qui risque d'endommager ou même de rompre le brin.

Un des buts de l'invention est de remédier à ces inconvénients de l'état de la technique.

### 3. Exposé de l'invention

L'invention vient améliorer la situation à l'aide d'une pince conforme à la revendication 1.

Lorsque la première partie du segment qui est logé dans la pince est maintenue déformée en flexion, le brin ne peut plus glisser longitudinalement dans la pince. La pression nécessaire pour bloquer le brin est donc celle suffisant à déformer le brin. Cette pression nécessaire est très facile à contrôler visuellement par l'opérateur, car elle correspond à un déplacement du moyen de blocage. Selon la technique antérieure au contraire, la pression empêchant un glissement longitudinal du brin est une compression du brin sur un segment laissé rectiligne c'est-à-dire sans le déformer, donc sans déplacement perceptible à l'oeil nu du moyen de blocage entre une position de contact sans pression appliquée, et une position de pression.

De plus, comme le moyen de guidage entoure le brin sur une deuxième partie du segment logé dans la pince, cette deuxième partie, qui n'est pas maintenue par le moyen de blocage, est tout de même empêchée de plier lorsque la pince avec le brin bloqué est poussée vers l'orifice, et ce même si une grande résistance est rencontrée à l'insertion à travers l'orifice. En positionnant l'extrémité libre du moyen de guidage au contact de l'orifice, ce qui revient à faire correspondre la longueur du pas d'insertion à la longueur du moyen de guidage, ou autrement dit, à la longueur de la partie du segment de brin contenu par le moyen de guidage, le mouvement d'insertion effectué pas par pas peut être répété très rapidement par l'opérateur, sans craindre de plier le brin.

Enfin, comme le brin est élastique en flexion, il reprend sa forme initiale, généralement rectiligne, dès que la pression sur le moyen de blocage est supprimée, ce qui permet au brin de coulisser librement dans le logement de la pince, sans qu'un mécanisme spécifique soit nécessaire pour libérer le brin du moyen de blocage, tel qu'un ressort. Ainsi, la pince peut être repositionnée aisément à son point de départ après l'insertion d'un pas de brin, sans qu'un effort particulier soit nécessaire pour desserrer la pince.

Grâce à l'invention, l'opération d'insertion est ainsi rendue plus efficace.

Selon l'invention le moyen de blocage comprend une mâchoire inférieure fixe, comprenant la première partie du logement, et une mâchoire supérieure mobile, apte à entrer au moins partiellement dans la première partie du logement pour recouvrir la première partie du segment logé, la mâchoire supérieure ayant un profil non rectiligne de manière à imprimer une forme non rectiligne à la première partie du segment logé lorsque les mâchoires sont rapprochées l'une de l'autre.

Pour imprimer une forme non-rectiligne à un brin flexible, il suffit qu'une pression lui soit appliquée sur le dessous et sur le dessus en quelques points de contact disposés alternativement sous et sur le brin. On comprend qu'en disposant les points de contact inférieurs sur la mâchoire inférieure et les points supérieurs sur la mâchoire supérieure, une multitude de profils de mâchoires sont possibles. Par exemple, une forme sinusoïdale a l'avantage de répartir la pression sur les surfaces inférieures et supérieures du brin. Par contre, une forme en dents de scie, si elle risque d'abimer le brin en raison de la concentration sur un petit nombre de points de la pression exercée sur les surfaces du brin, possède l'avantage d'une plus grande simplicité de fabrication.

Selon un aspect de l'invention, le moyen de blocage est actionné par une pression exercée par une main enserrant les deux mâchoires.

Afin de minimiser l'effort à déployer par l'opérateur de la pince, les mâchoires sont dimensionnées pour tenir ensemble dans une main de taille ordinaire, de préférence dans la paume. Ainsi, il suffit de serrer la main pour actionner le moyen de blocage. De plus, la sensibilité de la main fait que le mouvement des mâchoires l'une vers l'autre est très facilement détecté. Il est donc aisé pour l'opérateur, d'une part, de savoir quand le moyen de blocage est actionné, et d'autre part, de bien doser la force nécessaire sans se fatiguer.

En relâchant la pression de la main, les mâchoires s'éloignent dans un mouvement détecté par la sensibilité de la main. L'opérateur sait alors que le brin est redevenu rectiligne, qu'il n'est plus bloqué et qu'il peut donc coulisser dans la pince.

Selon un aspect de l'invention, la mâchoire supérieure peut prendre au moins une position éloignée de la mâchoire inférieure, où le logement est ouvert.

En éloignant les mâchoires un peu plus que nécessaire pour que le brin reprenne sa forme rectiligne, l'ouverture du logement de la pince devient complètement libre, ce qui permet de retirer de la pince le segment de brin à la fin de l'opération d'insertion, ou de loger dans la pince le segment de brin au début de l'opération d'insertion.

Selon un aspect de l'invention, la mâchoire supérieure est reliée à la pince par une charnière.

Avantageusement, une charnière assure l'alignement des mâchoires l'une face à l'autre.

Selon un aspect de l'invention, la mâchoire supérieure est reliée à la pince par une membrane flexible.

Avantageusement, la membrane et les mâchoires peuvent former une seule pièce. Par exemple, cette pièce peut être faite d'une matière plastique aux propriétés telles que les mâchoires sont suffisamment dures, et la membrane, étant mince, est suffisamment flexible pour permettre le mouvement de la mâchoire supérieure par rapport à la mâchoire inférieure.

Selon un aspect de l'invention, la mâchoire supérieure s'emboite dans la mâchoire inférieure à la manière d'un piston.

Avantageusement, la mâchoire supérieure est une pièce séparée du reste de la pince, et aucune pièce de liaison n'est nécessaire, telle qu'une charnière ou une membrane. Elle agit comme un piston dans la mâchoire inférieure qui forme avec au moins une partie de l'ouverture du logement la chemise du piston. Pour éviter que l'opérateur n'égare la mâchoire supérieure, détachable, elle peut toutefois être reliée à la pince par une chainette ou une cordelette.

Selon un aspect de l'invention, le moyen de guidage est un tube de guidage.

Avantageusement, la partie du logement qui n'est pas comprise dans le moyen de blocage est comprise dans le moyen de guidage, qui a la forme d'un tube. Ainsi, la longueur de la pince qui n'est pas occupée par le moyen de blocage sert de tube de guidage à la pince.

Selon un aspect de l'invention, le diamètre extérieur du tube de guidage est adapté pour que le tube entre par l'orifice du réceptacle.

Avantageusement, le tube de guidage peut coulisser dans l'orifice du réceptacle. Ainsi, le pas d'insertion du brin correspond approximativement à la longueur du tube de guidage.

Selon un aspect de l'invention, le réceptacle est un tube de réception du brin, et où le diamètre intérieur du tube de guidage est adapté pour que le tube de réception coulisse dans le tube de guidage.

Avantageusement, le tube de guidage est adapté pour que la pince fonctionne pour rembobiner un brin dans un réceptacle tel que par exemple un dévidoir prolongé par un tube d'amorce servant à faciliter l'introduction du brin dans une gaine lorsqu'il sort du dévidoir. Le tube d'amorce du dévidoir constitue le tube de réception du réceptacle dans le sens de l'invention. Après une utilisation du brin comme aiguille de tirage de câble dans une gaine, par exemple, la pince avec un diamètre intérieur de tube de guidage ainsi adapté, c'est-à-dire légèrement supérieur au diamètre extérieur du tube de réception, est capable de rembobiner le brin dans ce type de réceptacle. Le pas d'insertion du brin correspond approximativement à la longueur du tube de guidage.

Selon un aspect de l'invention, l'ouverture du logement dans sa deuxième partie est une fente longitudinale dans le tube de guidage, non parallèle au tube de guidage.

Avantageusement, comme la fente n'est pas parallèle au tube de guidage, elle n'est pas parallèle non plus au logement, ni au brin logé. Le brin logé ne peut donc pas sortir du logement par accident lors de l'opération d'insertion pas à pas. Seule une manipulation expresse de la part de l'opérateur peut forcer le brin à se positionner face à la fente pour sortir par l'ouverture.

Selon un aspect de l'invention, la fente suit une spirale sur au moins une partie de la longueur du tube de guidage.

Avantageusement, la forme en spirale permet d'insérer un bout du brin dans le tube de guidage en faisant tournoyer la pince autour du brin, sans avoir à déformer le brin.

Selon un aspect de l'invention, la fente suit une forme sinusoïde sur au moins une partie de la longueur du tube de guidage.

Avantageusement, la forme en sinusoïde, si elle n'est pas très prononcée, permet de pousser facilement un bout du brin dans le tube de guidage en le déformant légèrement pour qu'il adopte la forme.

L'invention concerne aussi une multitude d'autres formes convenant pour la fente, qui sont non parallèles au tube de guidage.

Les différents aspects de la pince qui viennent d'être décrits peuvent être mis en oeuvre indépendamment les uns des autres, ou, pour certains, en combinaison les uns avec les autres.

L'invention concerne aussi un procédé d'insertion d'un brin élastique en flexion à travers un orifice d'un réceptacle à l'aide d'une pince conforme à celle qui vient d'être décrite, comprenant une étape de positionnement d'un segment de brin dans un logement de la pince, et au moins une itération d'insertion d'un pas de brin comprenant les étapes suivantes:
- application d'une pression de la main sur un moyen de blocage ayant pour effet de bloquer le brin dans la pince en déformant une partie du segment de brin,
- mise en contact d'une extrémité d'un moyen de guidage avec l'orifice du réceptacle,
- rapprochement de la pince et de l'orifice sur une distance correspondant à la longueur effective du moyen de guidage et au pas d'insertion,
- relâchement de la pression sur le moyen de blocage ayant pour effet de permettre le coulissement du brin sans ouvrir le logement,
- repositionnement par éloignement de la pince de l'orifice sur une distance correspondant au pas d'insertion.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- les **figure 1** présente une première vue de la pince, dans une position ouverte, selon un aspect de l'invention;
- la **figure 2** présente une deuxième vue de la pince, dans une position ouverte, selon un aspect de l'invention;
- la **figure 3** présente une troisième vue de la pince, dans une position fermée, selon un aspect de l'invention;
- la **figure 4** présente une quatrième vue, axiale, de la pince dans une position ouverte, selon un aspect de l'invention;
- la **figure 5** présente une vue de la pince selon un autre mode de réalisation de l'invention.

### 5. Description détaillée d'au moins un mode de réalisation de l'invention

Dans la suite de la description, on présente des exemples de plusieurs modes de réalisation de l'invention selon différents aspects, mais l'invention peut être réalisée avec des formes différentes.

Le terme de brin est utilisé pour désigner l'objet filiforme à insérer dans un réceptacle grâce à la pince selon l'invention. La pince selon l'invention peut être utilisée pour tous types d'objets filiformes élastiques en flexion. On comprend que le terme de brin englobe par exemple les câbles électriques, les câbles optiques, ou les aiguilles de tirage de câble, en toute matière, présentant cette caractéristique mécanique d'élasticité en flexion.

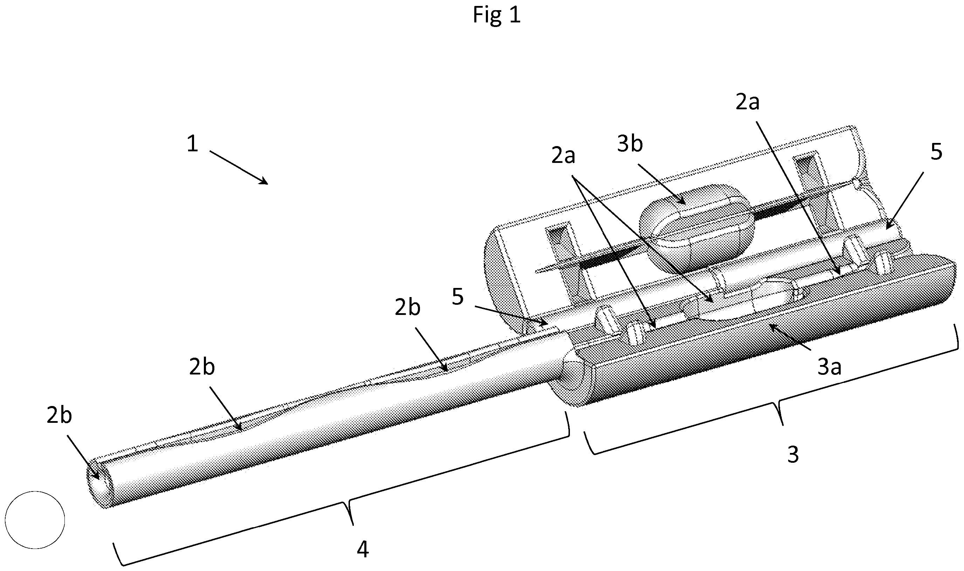

Plusieurs vues d'un même exemple de pince, selon un premier mode de réalisation de l'invention, sont présentées par les **figures 1****,** **2****,** **3** **et** **4****,** où les références utilisées sont les mêmes.

La pince 1 est de forme longitudinale et est traversée dans toute sa longueur par un logement 2 pour un brin, d'une première ouverture du logement 2 à une extrémité de la pince à une deuxième ouverture à l'autre l'extrémité. Lorsqu'il est logé dans ce logement 2, le brin peut donc dépasser des deux bouts.

La pince 1 se compose de deux parties principales en alignement, toutes deux traversées par le logement 2:
- une partie comprenant un moyen de blocage 3, et
- une partie comprenant un moyen de guidage 4.

Le moyen de guidage 4 a la forme d'un tube dans les exemples illustrés, et est appelé par la suite tube de guidage. Mais d'autres modes de réalisation sont possibles avec d'autres formes pour le moyen de guidage 4, selon le type d'ouverture du réceptacle dans lequel le brin est destiné à être inséré.

Le moyen de blocage 3 se compose de deux mâchoires 3a et 3b reliées par une charnière 5. Cette charnière peut être remplacée par tout autre moyen apte à guider la mâchoire supérieure 3b vers la mâchoire inférieure 3a. La mâchoire inférieure 3a est fixe et solidaire du tube de guidage 4 avec lequel elle peut former une seule pièce, tandis que la mâchoire supérieure 3b est mobile par rapport au reste de la pince 1.

La partie du logement 2a se trouvant dans le moyen de blocage 3 est dans la mâchoire inférieure 3a, et comprend une ouverture face à la mâchoire supérieure 3b.

Cette ouverture du logement 2 se prolonge sous la forme d'une fente 6, sur toute la longueur de la partie du logement 2b se trouvant dans le tube de guidage 4.

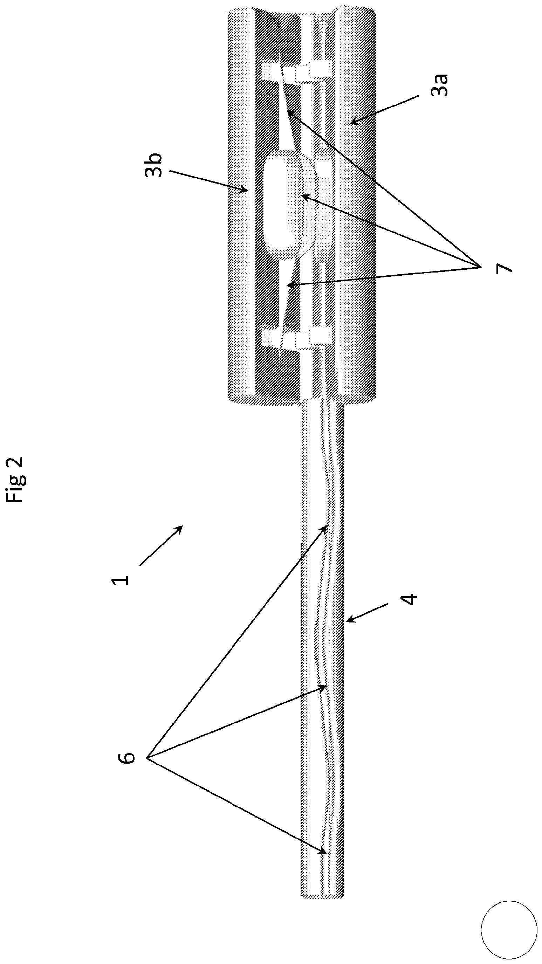

Par cette ouverture, un opérateur peut facilement placer un brin élastique en flexion dans le logement 2. Le brin une fois logé peut coulisser dans le logement sans en sortir. En effet, dans le moyen de blocage 3, il suffit de rapprocher la mâchoire supérieure 3b de la mâchoire inférieure 3a pour fermer l'ouverture du logement 2 dans sa partie 2a. Dans le tube de guidage 4, une particularité de la fente 6 est qu'elle n'est pas parallèle au logement 2b. Le brin, qui, lui, est parallèle au logement 2a une fois qu'il y a été inséré par l'opérateur à travers la fente 6 en le déformant légèrement, ne pourra donc plus en sortir, sauf par une opération inverse de l'opérateur impliquant une déformation similaire. La fente 6 peut être rectiligne sans être parallèle, par exemple adopter la forme d'une légère spirale partant de l'ouverture de la partie 2a à sa jonction avec la partie 2b du logement 2, pour rejoindre l'extrémité libre du tube de guidage 4 en tournant autour. La fente 6 peut aussi être sinusoïdale sans tourner autour du tube de guidage 4, comme le montre la figure 2.

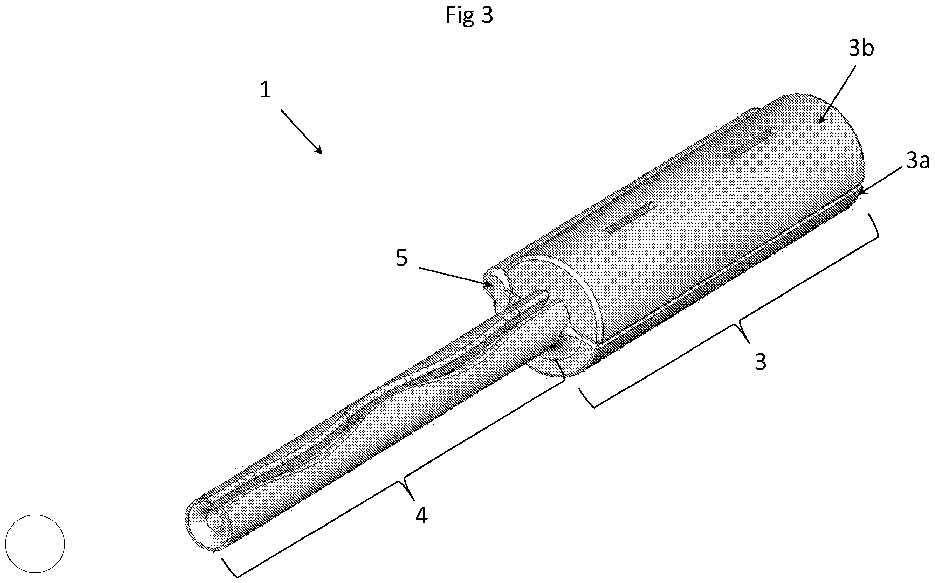

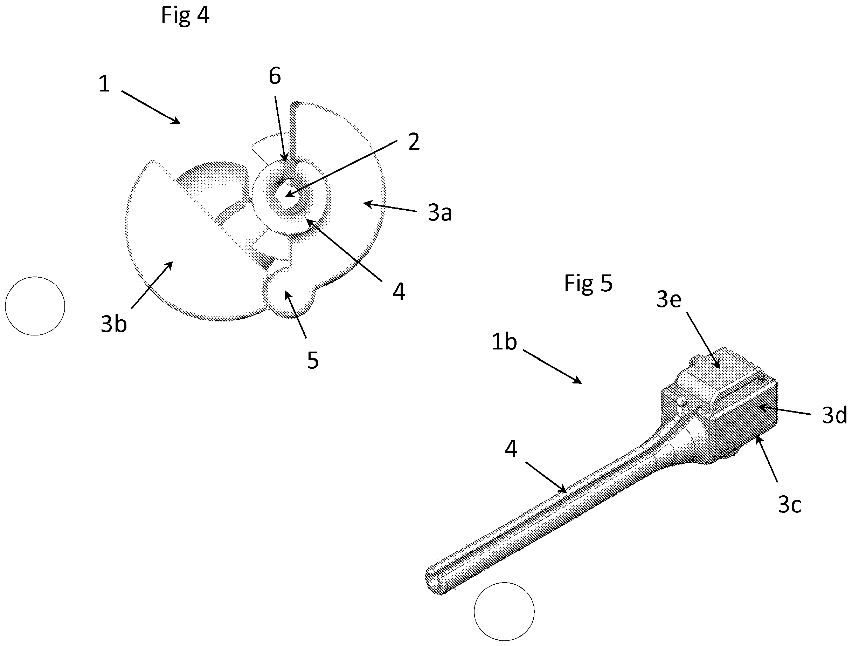

Une fois le brin logé dans la pince, il peut coulisser tant que le moyen de blocage n'est que partiellement fermé, c'est-à-dire tant que les mâchoires 3a et 3b sont suffisamment éloignées l'une de l'autre pour que le logement 2 reste rectiligne sur toute sa longueur, y compris dans sa partie 2a. Les figures 2 et 4 illustrent une telle position des mâchoires partiellement fermées. Afin de contrôler la fermeture du moyen de blocage 3, l'opérateur met les deux mâchoires 3a et 3b dans la paume de sa main. Dans leurs positions partiellement ou complètement fermées, les mâchoires adoptent une forme sensiblement cylindrique, ergonomiquement adaptée à un maniement d'une seule main. La figure 3 illustre bien cette forme cylindrique du moyen de blocage 3 de la pince 1, lorsqu'il est en position fermée.

Lorsque l'opérateur ferme complètement le moyen de blocage 3, c'est-à-dire lorsqu'il rapproche au maximum les deux mâchoires l'une de l'autre en serrant la main, le brin est bloqué et ne peut plus coulisser, car le logement 2 dans lequel il est logé n'est plus rectiligne. En effet, la surface de contact 7 de la mâchoire supérieure 3b avec le brin possède un profil non rectiligne qui pousse un segment du brin au fond de la mâchoire inférieure 3a, en le déformant en flexion. Dans ce mode de réalisation, le profil est sinusoïdal mais d'autres formes sont possibles, comme par exemple des dents de scie. Il est préférable mais pas obligatoire que le profil de la surface de contact de la mâchoire inférieure 3a soit identique, afin que les deux mâchoires touchent le brin sur le segment déformé, ce qui présente l'avantage d'augmenter la force de blocage du brin dans la pince 1 en position fermée. Une autre façon d'augmenter la force de blocage est d'augmenter l'adhérence de la surface de contact d'au moins une des mâchoires, par un matériau approprié, tel que de caoutchouc par exemple.

Lorsque l'opérateur desserre la main, les mâchoires redeviennent libres de s'éloigner l'une de l'autre. La force élastique du brin a tendance à lui faire reprendre sa forme rectiligne, ce qui a pour effet de repousser la mâchoire supérieure 3b de la mâchoire inférieure 3a. Le logement 2 redevient rectiligne sur toute sa longueur y compris dans sa partie 2a, et le brin peut à nouveau coulisser dans la pince.

L'opérateur peut ainsi alterner très rapidement entre une position où le brin est bloqué dans la pince, et une position ou il coulisse librement, simplement en tenant le moyen de blocage de la pince dans la paume de la main, et en serrant ou desserrant la pince sans la lâcher, ce qui est un des mouvements musculaires les plus faciles et les moins fatigants pour le corps humain.

Grâce au tube de guidage 4, il devient très facile d'insérer le brin dans un réceptacle, en coordonnant le mouvement alternatif de serrement et desserrement de la paume de la main avec un mouvement de va-et-vient vers l'orifice du réceptacle.

En effet, la forme tubulaire du moyen de guidage 4 permet de faire coulisser la pince 1 par rapport à l'orifice du réceptacle, ce qui évite qu'une partie de brin se trouvant entre la pince et le réceptacle soit à l'air libre lorsque le brin est poussé vers le réceptacle, auquel cas cette partie du brin risquerait de plier, voire de casser.

Il existe au moins deux variantes de réalisation du tube de guidage 4, selon que le tube de guidage 4 entre dans le réceptacle (première variante), ou que le réceptacle entre dans le tube de guidage 4 (deuxième variante). Dans la deuxième variante, le réceptacle est aussi un tube, appelé tube d'insertion pour le distinguer du tube de guidage. Un tube d'insertion est par exemple une gaine destinée à recevoir un câble si le brin est un câble, ou un tube d'amorce d'aiguille de tirage de câble, si le brin est une aiguille.

Dans la première variante, le diamètre extérieur du tube de guidage 4 doit être légèrement inférieur à celui de l'orifice du réceptacle afin d'y glisser aisément.

Dans la deuxième variante, le diamètre intérieur du tube de guidage 4, c'est-à-dire le diamètre intérieur de la partie 2b du logement 2 qui est dans le tube de guidage, doit être légèrement supérieure au diamètre extérieur du tube d'insertion, afin que celui-ci y glisse aisément.

Pour ces deux variantes, le procédé d'insertion pas par pas est similaire. Un pas d'insertion correspond à la longueur du mouvement de glissement du tube de guidage 4 dans l'orifice du réceptacle, ou du mouvement de glissement de l'orifice du tube d'insertion dans le tube de guidage 4, selon la variante. On comprend que la longueur de ce pas d'insertion peut donc atteindre la longueur du tube de guidage 4.

Après avoir logé le brin dans le logement 2 de la pince 1 en ouvrant puis refermant le moyen de blocage 3, l'opérateur saisit de la paume de sa main le moyen de blocage 3 et positionne l'extrémité libre du tube de guidage 4 dans l'orifice du réceptacle, ou il positionne l'orifice du tube d'insertion dans l'extrémité libre du tube de guidage 4, selon la variante.

Il effectue ensuite un mouvement de va-et-vient sur la longueur du pas d'insertion, en serrant la paume en direction de l'orifice et en desserrant la paume dans la direction inverse. Ce geste est très proche de celui appliqué à une pompe à vélo pour gonfler un pneu. A chaque mouvement, une longueur de brin correspondant au pas d'insertion est ainsi insérée dans le réceptacle. Grâce au moyen de guidage 3 et au moyen de blocage 4 de la pince 1 selon l'invention, on comprend que pendant chaque mouvement d'insertion, le brin ne peut pas plier, même s'il rencontre une résistance dans le réceptacle.

La **figure 5** présente une vue d'une pince selon un autre mode de réalisation de l'invention.

La pince 1b diffère de la pince 1 par le moyen de blocage 3c. Le moyen de blocage 3c comprend également une mâchoire inférieure 3d inférieure formant une seule pièce avec le moyen de guidage 4, et une mâchoire supérieure mobile 3e, mais celle-ci n'est pas reliée à la mâchoire inférieure 3d par une charnière ou une membrane flexible. Dans ce mode, la mâchoire supérieure 3e est une pièce détachée de la pince, adaptée pour glisser dans l'ouverture de la mâchoire inférieure 3d, à la manière d'un piston dans sa chemise. Pour ouvrir la pince et loger le brin, il suffit de retirer complètement la mâchoire supérieure 3e de la pince. Une chainette ou une cordelette, non illustrée, peut être ajoutée entre la mâchoire supérieure 3e et la pince pour éviter la perte de la petite pièce que constitue la mâchoire supérieure 3e. Ce mode de réalisation peut convenir pour un petit modèle de pince, où une charnière serait plus fragile. Dans un tel modèle de pince adapté pour des brins de petite section, le moyen de blocage peut être tenu entre les doigts, plutôt que dans la paume de la main, par exemple avec le pouce positionné sur la mâchoire supérieure 3e et un ou plusieurs doigts positionnés sous la mâchoire inférieure 3d.

Les composantes de la pince selon l'invention, ainsi que sa longueur totale, peuvent effectivement être facilement dimensionnées et adaptées en fonction des dimensions et de la forme de section du brin à insérer. En particulier, la largeur du logement 2 est fonction de la largeur du brin, et la forme du logement 2 peut être configurée sensiblement circulaire ou sensiblement rectangulaire, selon que le brin est de section circulaire ou plutôt aplatie.

## Revendications

1. **Pince** pour insérer un brin élastique en flexion à travers un orifice d'un réceptacle, la pince comprenant un logement longitudinal (2) apte à loger un segment du brin et dans lequel le brin peut coulisser, la pince (1, 1b) comprenant :
• un moyen de blocage (3, 3c) comprenant une première partie (2a) du logement,
• un moyen de guidage (4) comprenant une deuxième partie (2b) du logement, le moyen de guidage (4) étant configuré pour entourer au moins partiellement une deuxième partie du segment logé, et configuré pour guider la pince en direction de l'orifice du réceptacle, pince dans laquelle le moyen de blocage (3, 3c) est apte à déformer en flexion une première partie du segment logé lorsqu'une pression externe est appliquée sur le moyen de blocage, qui est destiné à être utilisé avec le brin dont la force élastique redonne à la première partie du segment sa forme initiale lorsque la pression externe n'est plus appliquée, le coulissement du brin étant bloqué par la déformation en flexion de la première partie du segment logé, et ledit moyen de blocage (3, 3c) comprend en outre :
• une mâchoire inférieure (3a, 3d) fixe et solidaire du moyen de guidage (4) avec lequel elle forme une seule pièce, comprenant la première partie (2a) du logement, et
• une mâchoire supérieure mobile (3b, 3e) par rapport au reste de la pince, apte à être guidée vers la mâchoire inférieure (3a, 3d) et à entrer au moins partiellement dans la première partie (2a) du logement pour recouvrir la première partie du segment logé, la mâchoire supérieure (3b, 3e) ayant un profil non rectiligne de manière à imprimer une forme non rectiligne à la première partie du segment logé lorsque les mâchoires ((3a, 3b), (3d, 3e)) sont rapprochées l'une de l'autre,
pince dans laquelle des points de contact inférieurs sont disposés sur la mâchoire inférieure (3a, 3d) et des points de contact supérieurs sont disposés sur la mâchoire supérieure (3b, 3e), lesdits points de contact étant configurés pour être disposés alternativement sous et sur la première partie du segment logé afin d'appliquer une pression sur le dessous et sur le dessus de ladite première partie du segment logé,
et pince dans laquelle les mâchoires ((3a, 3b), (3e, 3d)) sont configurées pour s'éloigner l'une de l'autre lorsque ladite pression externe n'est plus appliquée, la mâchoire supérieure (3b, 3e) étant apte à être repoussée de la mâchoire inférieure (3a, 3d) par une force élastique du brin reprenant sa forme rectiligne.

2. **Pince selon la revendication 1**, où le moyen de blocage (3) est actionnable par une pression exercée par une main enserrant les deux mâchoires (3a, 3b).

3. **Pince selon la revendication 1**, où la mâchoire supérieure (3b) peut prendre au moins une position éloignée de la mâchoire inférieure (3a), où le logement (2, 2a) est ouvert.

4. **Pince selon l'une des revendications 1 à 3**, où la mâchoire supérieure (3b) est reliée au reste de la pince (1) par une charnière (5).

5. **Pince selon l'une des revendications 1 à 3,** où la mâchoire supérieure (3b) est reliée au reste de la pince (1) par une membrane flexible.

6. **Pince selon l'une des revendications 1 à 3,** où la mâchoire supérieure (3e) s'emboite dans la mâchoire inférieure (3d) à la manière d'un piston.

7. **Pince selon l'une des revendications précédentes,** où le moyen de guidage (4) est un tube de guidage.

8. Système comprenant un réceptacle et une pince **selon la revendication 7,** où le diamètre extérieur du tube de guidage (4) est adapté pour que le tube entre par l'orifice du réceptacle.

9. Système comprenant un réceptacle et une pince **selon la revendication 7,** où le réceptacle est un tube de réception du brin, et où le diamètre intérieur du tube de guidage (4) est adapté pour que le tube de réception coulisse dans le tube de guidage.

10. Pince selon la revendication 7 ou système selon les revendications 8 ou 9, où l'ouverture du logement (2) dans sa deuxième partie (2b) est une fente longitudinale (6) dans le tube de guidage (4), non parallèle au tube de guidage.

11. **Pince** ou système **selon la revendication 10,** où la fente suit une spirale sur au moins une partie de la longueur du tube de guidage (4).

12. **Pince** ou système **selon la revendication 10,** où la fente (6) suit une forme sinusoïde sur au moins une partie de la longueur du tube de guidage (4).

13. **Procédé d'insertion** d'un brin élastique en flexion à travers un orifice d'un réceptacle à l'aide d'une pince (1, 1b) conforme à la revendication 1, comprenant une étape de positionnement d'un segment de brin dans un logement (2, 2a, 2b) de la pince, et au moins une itération d'insertion d'un pas de brin comprenant les étapes suivantes:
• application d'une pression de la main sur le moyen de blocage (3, 3c) ayant pour effet de bloquer le brin dans la pince en déformant une partie du segment de brin,
• mise en contact d'une extrémité du moyen de guidage (4) avec l'orifice du réceptacle,
• rapprochement de la pince et de l'orifice sur une distance correspondant à la longueur effective du moyen de guidage (4) et au pas d'insertion,
• relâchement de la pression sur le moyen de blocage (3, 3c) ayant pour effet de permettre le coulissement du brin sans ouvrir le logement (2a),
• repositionnement par éloignement de la pince de l'orifice sur une distance correspondant au pas d'insertion.

## Patentansprüche

1. Klemme zum Einsetzen eines biegeelastischen Strangs durch eine Öffnung in einen Behälter, wobei die Klemme eine längliche Aufnahme (2) beinhaltet, die dazu fähig ist, ein Segment des Strangs aufzunehmen, und in der der Strang gleiten kann, wobei die Klemme (1, 1b) Folgendes beinhaltet:
· ein Blockiermittel (3, 3c), das einen ersten Teil (2a) der Aufnahme beinhaltet,
· ein Führungsmittel (4), das einen zweiten Teil (2b) der Aufnahme beinhaltet, wobei das Führungsmittel (4) dazu konfiguriert ist, einen zweiten Teil des aufgenommenen Segments mindestens teilweise zu umgeben, und dazu konfiguriert ist, die Klemme in Richtung der Öffnung des Behälters zu führen,
Klemme, bei der das Blockiermittel (3, 3c) zum Biegeverformen eines ersten Teils des aufgenommenen Segments fähig ist, wenn ein Außendruck auf das Blockiermittel ausgeübt wird, das dazu bestimmt ist, mit dem Strang verwendet zu werden, dessen elastische Kraft dem ersten Teil des Segments seine ursprüngliche Form zurückgibt, wenn der Außendruck nicht mehr ausgeübt wird, wobei das Gleiten des Strangs durch die Biegeverformung des ersten Teils des aufgenommenen Segments blockiert wird, und wobei das Blockiermittel (3, 3c) ferner Folgendes beinhaltet:
· eine feststehende untere Backe (3a, 3d), die mit dem Führungsmittel (4), mit welchem sie einstückig ausgebildet ist, fest verbunden ist und den ersten Teil (2a) der Aufnahme beinhaltet und
· eine in Bezug auf den Rest der Klemme bewegliche obere Backe (3b, 3e), die dazu fähig ist, zu der unteren Backe (3a, 3d) geführt zu werden und mindestens teilweise in den ersten Teil (2a) der Aufnahmen einzutreten, um den ersten Teil des aufgenommenen Segments zu bedecken, wobei die obere Backe (3b, 3e) ein nicht geradliniges Profil aufweist, um dem ersten Teil des aufgenommenen Segments eine nicht geradlinige Form zu verleihen, wenn die Backen ((3a, 3b), (3d, 3e)) einander angenähert werden,
Klemme, bei der untere Kontaktpunkte auf der unteren Backe (3a, 3d) und obere Kontaktpunkte auf der oberen Backe (3b, 3e) angeordnet sind, wobei die Kontaktpunkte dazu konfiguriert sind, abwechselnd unter und über dem ersten Teil des aufgenommenen Segments angeordnet zu sein, um einen Druck auf die Unterseite und auf die Oberseite des ersten Teils des aufgenommenen Segments auszuüben,
und Klemme, bei der die Backen ((3a, 3b), (3e, 3d)) dazu konfiguriert sind, sich voneinander zu entfernen, wenn der Außendruck nicht mehr ausgeübt wird, wobei die obere Backe (3b, 3e) dazu fähig ist, durch eine elastische Kraft des Strangs, der seine geradlinige Form wieder einnimmt, von der unteren Backe (3a, 3d) weggedrückt zu werden.

2. Klemme nach Anspruch 1, wobei das Blockiermittel (3) durch einen Druck betätigbar ist, der durch eine Hand ausgeübt wird, die die zwei Backen (3a, 3b) umschließt.

3. Klemme nach Anspruch 1, wobei die obere Backe (3b) mindestens eine von der unteren Backe (3a) entfernte Position einnehmen kann, in der die Aufnahme (2, 2a) offen ist.

4. Klemme nach einem der Ansprüche 1 bis 3, wobei die obere Backe (3b) mit dem Rest der Klemme (1) durch ein Scharnier (5) verbunden ist.

5. Klemme nach einem der Ansprüche 1 bis 3, wobei die obere Backe (3b) mit dem Rest der Klemme (1) durch eine flexible Membran verbunden ist.

6. Klemme nach einem der Ansprüche 1 bis 3, wobei die obere Backe (3e) kolbenartig in die untere Backe (3d) eingreift.

7. Klemme nach einem der vorhergehenden Ansprüche, wobei das Führungsmittel (4) ein Führungsrohr ist.

8. System, das einen Behälter und eine Klemme nach Anspruch 7 beinhaltet, wobei der Außendurchmesser des Führungsrohrs (4) dazu angepasst ist, dass das Rohr durch die Öffnung des Behälters eintritt.

9. System, das einen Behälter und eine Klemme nach Anspruch 7 beinhaltet, wobei der Behälter ein Rohr zur Aufnahme des Strangs ist und wobei der Innendurchmesser des Führungsrohrs (4) dazu angepasst ist, dass das Aufnahmerohr in dem Führungsrohr gleitet.

10. Klemme nach Anspruch 7 oder System nach den Ansprüchen 8 oder 9, wobei die Öffnung der Aufnahme (2) in ihrem zweiten Teil (2b) ein Längsschlitz (6) in dem Führungsrohr (4) ist, der zu dem Führungsrohr nicht parallel ist.

11. Klemme oder System nach Anspruch 10, wobei der Schlitz über mindestens einen Teil der Länge des Führungsrohrs (4) spiralförmig ist.

12. Klemme oder System nach Anspruch 10, wobei der Schlitz (6) über mindestens einen Teil der Länge des Führungsrohrs (4) sinusförmig ist.

13. Verfahren zum Einsetzen eines biegeelastischen Strangs durch eine Öffnung eines Behälters mit Hilfe einer Klemme (1, 1b) nach Anspruch 1, beinhaltend einen Schritt des Positionierens eines Strangsegments in einer Aufnahme (2, 2a, 2b) der Klemme und mindestens eine Wiederholung des Einsetzens einer Stranglänge, beinhaltend die folgenden Schritte:
· Ausüben, mit der Hand, eines Drucks auf das Blockiermittel (3, 3c), was zur Folge hat, dass der Strang in der Klemme blockiert wird, indem ein Teil des Strangsegments verformt wird,
· In-Kontakt-Bringen eines Endes des Führungsmittels (4) mit der Öffnung des Behälters,
· Annähern der Klemme und der Öffnung über eine Entfernung, die der effektiven Länge des Führungsmittels (4) und der Einsetzlänge entspricht,
· Wegnehmen des Drucks auf das Blockiermittel (3, 3c), was zur Folge hat, dass das Gleiten des Strangs ermöglicht wird, ohne die Aufnahme (2a) zu öffnen,
· erneutes Positionieren durch Entfernen der Klemme von der Öffnung über eine Entfernung, die der Einsetzlänge entspricht.

## Claims

1. Clamp for inserting a flexurally elastic strand through an orifice of a receptacle, the clamp comprising a longitudinal housing (2) which is able to accommodate a segment of the strand and in which the strand can slide, the clamp (1, 1b) comprising:
• a blocking means (3, 3c) comprising a first part (2a) of the housing,
• a guide means (4) comprising a second part (2b) of the housing, the guide means (4) being configured to at least partially surround a second part of the accommodated segment and configured to guide the clamp in the direction of the orifice of the receptacle,
in which clamp the blocking means (3, 3c) is able to flexurally deform a first part of the accommodated segment when an external pressure is applied to the blocking means, which is intended to be used with the strand of which the elastic force returns the first part of the segment to its initial shape when the external pressure is no longer applied, the strand being prevented from sliding by the flexural deformation of the first part of the accommodated segment, and said blocking means (3, 3c) further comprises:
• a lower jaw (3a, 3d) which is fixed and secured to the guide means (4) with which it forms a single piece, comprising the first part (2a) of the housing, and
• an upper jaw (3b, 3e) which is movable with respect to the rest of the clamp, able to be guided towards the lower jaw (3a, 3d) and to at least partially enter the first part (2a) of the housing in order to cover the first part of the accommodated segment, the upper jaw (3b, 3e) having a nonrectilinear profile so as to impress a nonrectilinear shape on the first part of the accommodated segment when the jaws ((3a, 3b), (3d, 3e)) are moved together,
in which clamp lower contact points are disposed on the lower jaw (3a, 3d) and upper contact points are disposed on the upper jaw (3b, 3e), said contact points being configured to be disposed alternately under and over the first part of the accommodated segment in order to apply a pressure to the bottom and top of said first part of the accommodated segment,
and in which clamp the jaws ((3a, 3b), (3e, 3d)) are configured to move apart from one another when said external pressure is no longer applied, the upper jaw (3b, 3e) being able to be pushed away from the lower jaw (3a, 3d) by an elastic force of the strand returning to its rectilinear shape.

2. Clamp according to Claim 1, wherein the blocking means (3) is able to be actuated by a pressure exerted by a hand clasping the two jaws (3a, 3b).

3. Clamp according to Claim 1, wherein the upper jaw (3b) can take up at least one position moved away from the lower jaw (3a), in which the housing (2, 2a) is open.

4. Clamp according to one of Claims 1 to 3, wherein the upper jaw (3b) is joined to the rest of the clamp (1) by a hinge (5).

5. Clamp according to one of Claims 1 to 3, wherein the upper jaw (3b) is joined to the rest of the clamp (1) by a flexible membrane.

6. Clamp according to one of Claims 1 to 3, wherein the upper jaw (3e) fits into the lower jaw (3d) in the manner of a piston.

7. Clamp according to one of the preceding claims, wherein the guide means (4) is a guide tube.

8. System comprising a receptacle and a clamp according to Claim 7, wherein the outside diameter of the guide tube (4) is designed for the tube to enter through the orifice of the receptacle.

9. System comprising a receptacle and a clamp according to Claim 7, wherein the receptacle is a tube for receiving the strand, and wherein the inside diameter of the guide tube (4) is designed for the receiving tube to slide in the guide tube.

10. Clamp according to Claim 7 or system according to Claim 8 or 9, wherein the opening in the second part (2b) of the housing (2) is a longitudinal slot (6) in the guide tube (4), not parallel to the guide tube.

11. Clamp or system according to Claim 10, wherein the slot follows a spiral along at least a part of the length of the guide tube (4).

12. Clamp or system according to Claim 10, wherein the slot (6) follows a sinusoidal shape along at least a part of the length of the guide tube (4).

13. Method for inserting a flexurally elastic strand through an orifice of a receptacle with the aid of a clamp (1, 1b) in accordance with Claim 1, comprising a step of positioning a strand segment in a housing (2, 2a, 2b) of the clamp, and at least one iteration of inserting a length of strand comprising the following steps of:
· applying a hand pressure to the blocking means (3, 3c), having the effect of blocking the strand in the clamp by deforming a part of the strand segment,
· bringing one end of the guide means (4) into contact with the orifice of the receptacle,
· moving the clamp and the orifice together over a distance corresponding to the effective length of the guide means (4) and the insertion length,
· releasing the pressure on the blocking means (3, 3c), having the effect of allowing the strand to slide without the housing (2a) being opened,
· repositioning by moving the clamp away from the orifice over a distance corresponding to the insertion length.
